# EUROPEAN PATENT SPECIFICATION

(11) **EP 4 403 447 B1**
(45) Date of publication and mention of the grant of the patent: **06.08.2025**
(21) Application number: 23215789.1
(22) Date of filing: 12.12.2023
(51) Int. Cl.: B62J 17/04, B60W 40/00, B62J 45/41, B62J 45/42, B62J 27/00

(54) **STRADDLED VEHICLE**
GRÄTSCHSITZFAHRZEUG
VÉHICULE À SELLE

(30) Priority: 19.01.2023 JP 2023006615
(43) Date of publication of application: 24.07.2024
(73) Proprietor: Yamaha Hatsudoki Kabushiki Kaisha, Iwata-shi, Shizuoka 438-8501 (JP)
(72) Inventor: Shibata, Hayato, Iwata-shi, Shizuoka, 4388501 (JP); Terada, Hirohisa, Iwata-shi, Shizuoka, 4388501 (JP); Kimura, Yusuke, Iwata-shi, Shizuoka, 4388501 (JP); Nakagami, Masayuki, Iwata-shi, Shizuoka, 4388501 (JP)
(74) Representative: Grünecker Patent- und Rechtsanwälte PartG mbB

(56) References cited:
- JP-A- 2022 021 383
- JP-A- 2022 108 854
- US-A1- 2020 398 924
- US-A1- 2021 061 395
- US-B2- 10 562 477

## Description

The present invention relates to a straddled vehicle according to the preamble of independent claim 1. Such a straddled vehicle can be taken from the prior art document JP 2022 108854 A.

Conventionally, some straddled vehicles are provided with a sensing device for detecting a situation in front of the vehicle. For example, in the straddled vehicle disclosed in WO 2019/180941 A, an imaging device is arranged behind the opening provided in the front cowl. It is also stated that the opening may be covered with a protective glass.

As in the straddled vehicle described above, the sensing device is protected from stepping stones, insects, dust, or the like by covering the sensing device with a transparent cover such as a protective glass. However, if the transparent cover is damaged by stepping stones, or if dirt adheres to the transparent cover due to insects, dust, or the like, the detection capability of the sensing device may deteriorate. In addition, fogging of the transparent cover may also reduce the detection capability of the sensing device.

In the above case, the dirt or fog can be easily removed by making the transparent cover detachable. Alternatively, the transparent cover can be easily replaced. However, in that case, there is concern about theft of the transparent cover or mischief. An object of the present invention is provide a straddled vehicle having improved maintainability of a transparent cover and to deter theft or mischief of the transparent cover in a straddled vehicle provided with the transparent cover for protecting a sensing device. According to the present invention said object is solved by straddled vehicle having the features of independent claim 1. Preferred embodiments are laid down in the dependent claims.

A straddled vehicle according to one aspect includes a vehicle body, a windscreen, a sensing device, and a transparent cover. The vehicle body includes a front cover. The windscreen is arranged above the front cover. The sensing device is arranged behind the front cover. The sensing device detects a situation in front of the vehicle body. The transparent cover is arranged in front of the sensing device. The transparent cover includes a first mounting portion detachably attached to the front cover. The windscreen overlaps the first mounting portion from above and/or from the front.

In the straddled vehicle according to the present aspect, the transparent cover is detachably attached to the front cover by the first mounting portion. Therefore, the maintainability of the transparent cover is improved. Moreover, the windscreen overlaps with the first mounting portion from above and/or from the front of the first mounting portion. Access to the first mounting portion is therefore restricted by the windscreen. Thereby, theft of the transparent cover or mischief is deterred.

The windscreen may be attached to the vehicle body so as to be movable between a first position and a second position. The second position may be located above the first position. The windscreen may overlap the first mounting portion from above when the windscreen is positioned at the first position. When the windscreen is positioned at the second position, the windscreen may not overlap the first mounting portion from above . In this case, when the windscreen is positioned at the first position, access to the first mounting portion is obstructed by the windscreen. Thereby, theft or mischief to the transparent cover is deterred. When the windscreen is positioned at the second position, access to the first attachment portion is possible.

The windscreen may overlap the first mounting portion from the front when the windscreen is positioned at the first position. When the windscreen is positioned at the second position, the windscreen may not overlap the first mounting portion from the front. In this case, when the windscreen is positioned at the first position, access to the first mounting portion is obstructed by the windscreen. Thereby, theft or mischief to the transparent cover is deterred. When the windscreen is positioned at the second position, access to the first attachment is possible.

The first mounting portion may be arranged on an upper surface of the transparent cover. In this case, ease of access to the first mounting portion improves maintainability.

The transparent cover may include a second mounting portion provided at a bottom of the transparent cover. The second mounting portion may be detachably attached to the front cover by fitting. In this case, the attachment and detachment of the transparent cover becomes easier.

The front cover may include an engaging portion to which the second mounting portion is attached. The engaging portion may support the second mounting portion such that the transparent cover is rotatable about the second mounting portion. In this case, the transparent cover can be easily removed from the front cover by rotating the transparent cover.

The front cover may include an outer cover and an inner cover. At least a portion of the inner cover may be arranged behind the outer cover. The engaging portion may be provided at the inner cover and may be arranged behind the outer cover. In this case, the engaging portion is protected by the outer cover.

A first gap may be provided between the side edge of the transparent cover and the front cover. In this case, fogging of the transparent cover is suppressed by air entering through the first gap.

The front cover may include a guide portion arranged between the transparent cover and the sensing device. The guide portion may cover a periphery of a first space between the transparent cover and the sensing device. In this case, even if water enters through the first gap, the guide portion prevents water from adhering to the sensing device or the rear surface of the transparent cover.

A second gap may be provided between the guide portion and the sensing device. The first space may communicate with a second space inside the front cover through the second gap. In this case, fogging of the transparent cover is suppressed by air entering the first space in the guide portion through the second gap.

A third gap may be provided between the guide portion and the transparent cover. The side edge of the transparent cover may have a bent shape to cover the third gap. In this case, the intrusion of water through the third gap is suppressed by the bent shape of the side edge of the transparent cover.

A wind guide port may be provided between a lower end of the windscreen and the transparent cover. In this case, part of the traveling air flows from the wind guide port to the back side of the windscreen, thereby rectifying the turbulent air in the space above a rider's head.

An upper surface of the transparent cover may have a downwardly recessed shape. In this case, the recessed shape of the transparent cover provides the wind guide port between the lower end of the windscreen and the transparent cover.

### BRIEF DESCRIPTION OF THE DRAWINGS

FIG. 1 is a side view of a straddled vehicle according to an embodiment.
FIG. 2 is a front view of a front cover.
FIG. 3 is a front view of the front cover with a windscreen and a transparent cover omitted.
FIG. 4 is a front view of the front cover when the windscreen is positioned at a first position.
FIG. 5 is a side sectional view of the front cover when the windscreen is positioned at the first position.
FIG. 6 is a front view of the front cover when the windscreen is positioned at a second position.
FIG. 7 is a side sectional view of the front cover when the windscreen is positioned at the second position.
FIG. 8 is a perspective view of the transparent cover.
FIG. 9 is an enlarged side sectional view of the front cover.
FIG. 10 is an enlarged side sectional view of the front cover.
FIG. 11 is an enlarged side sectional view of the front cover.
FIG. 12 is a cross-sectional view taken along the line XII-XII in FIG. 4.
FIG. 13 is an enlarged sectional view of the front cover and the transparent cover.

### DETAILED DESCRIPTION

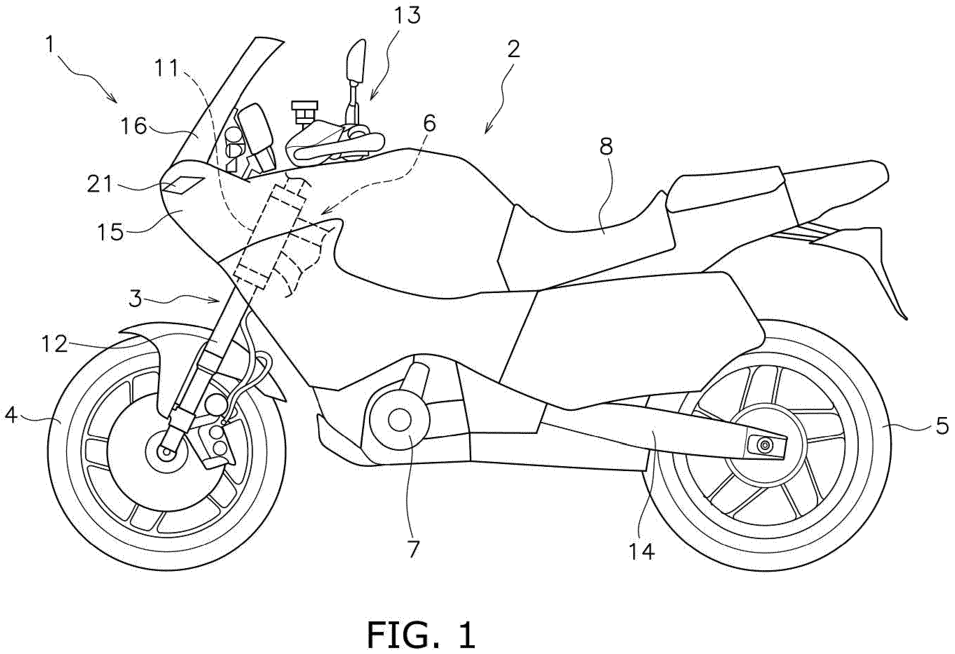

A straddled vehicle according to an embodiment will be described below with reference to the drawings. FIG. 1 is a side view of a straddled vehicle 1 according to an embodiment. The straddled vehicle 1 according to the embodiment is a motorcycle. As shown in FIG. 1, the straddled vehicle 1 includes a vehicle body 2, a steering device 3, a front wheel 4, and a rear wheel 5. In the following description, the front, rear, left, and right directions refer to the front, rear, up, down, left, and right directions as seen from a rider sitting on the seat 8. Accordingly, it is referred to a front-rear-direction of the vehicle, an up-down-direction of the vehicle and a left-right-direction of the vehicle. The up-down-direction of the vehicle corresponds with the vertical direction.

The vehicle body 2 includes a vehicle body frame 6, a power unit 7, and a seat 8. The vehicle body frame 6 includes a head pipe 11. The power unit 7 includes, for example, an internal combustion engine. Alternatively, the power unit 7 may include an electric motor.

The steering device 3 is supported by the head pipe 11 so as to be rotatable to the left and right. The steering device 3 includes a front fork 12 and a handle member 13. The front fork 12 rotatably supports the front wheel 4. The handle member 13 is connected to the front fork 12. The rear wheel 5 is rotatably supported by the vehicle body frame 6 via a swing arm 14.

The vehicle body 2 includes a front cover 15. The front cover 15 is arranged in front of the head pipe 11. The front cover 15 covers the head pipe 11 from the front. The vehicle body 2 includes a windscreen 16. The windscreen 16 is arranged above the front cover 15. The windscreen 16 is attached to the front cover 15.

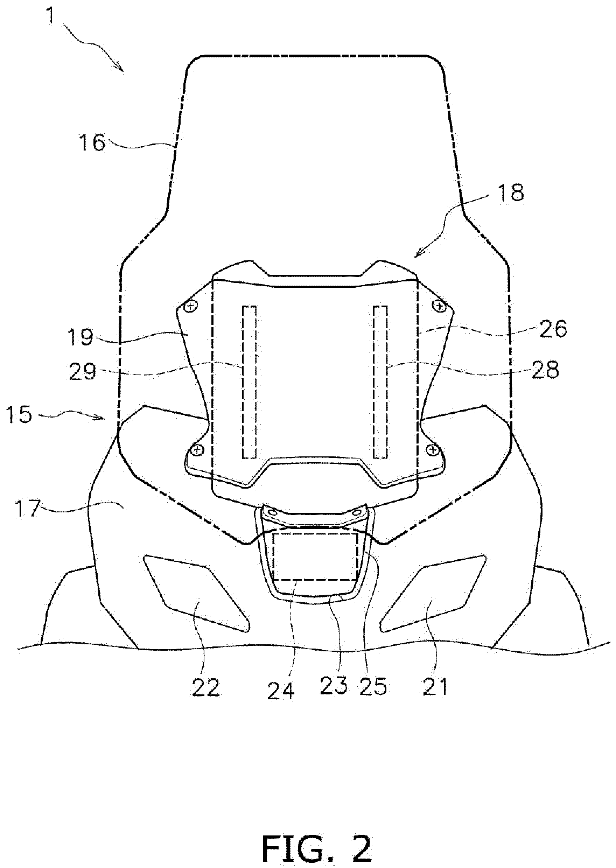

FIG. 2 is a front view of the front cover 15. As shown in FIG. 2, the straddled vehicle 1 includes a left light 21 and a right light 22. The left light 21 and the right light 22 are, for example, position lights. Alternatively, the left light 21 and the right light 22 may be headlights. The front cover 15 includes an opening 23. The opening 23 is arranged below the windscreen 16.

The straddled vehicle 1 includes a sensing device 24. The sensing device 24 detects a situation in front of the vehicle body 2. The sensing device 24 is, for example, a camera, and photographs the front of the vehicle body 2 to generate image data showing the front of the vehicle body 2. The sensing device 24 is arranged behind the front cover 15. The sensing device 24 is arranged behind the opening 23. The sensing device 24 overlaps the opening 23 as seen from the vehicle front view. A transparent cover 25 for protecting the sensing device 24 is arranged in the opening 23. The transparent cover 25 is made of transparent resin, for example. Alternatively, the transparent cover 25 may be made of transparent glass. The transparent cover 25 is arranged in front of the sensing device 24. The opening 23 is closed by the transparent cover 25.

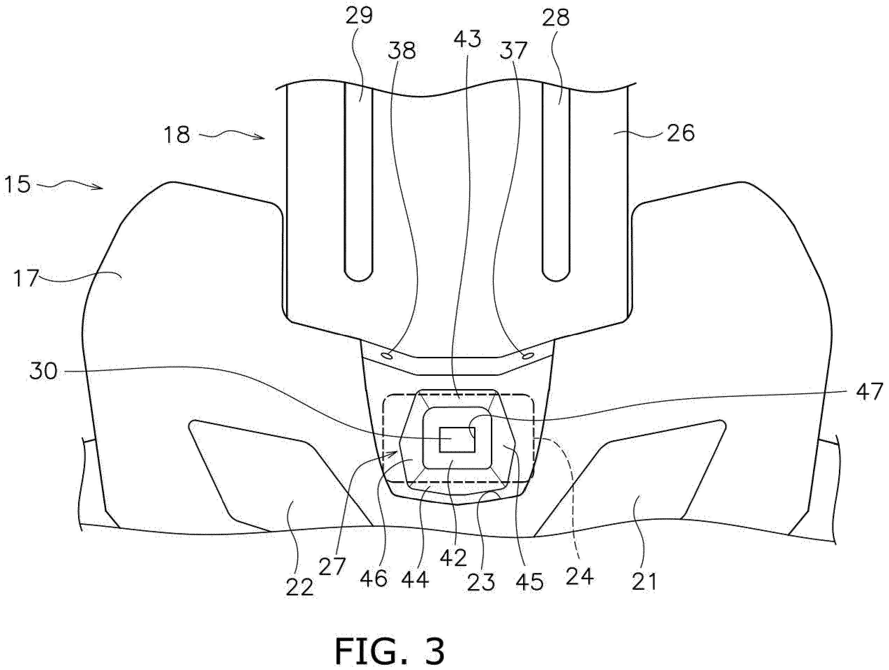

The front cover 15 includes an outer cover 17 and an inner cover 18. The left light 21 and the right light 22 are arranged on the outer cover 17. The opening 23 is provided at the outer cover 17. FIG. 3 is a front view of the front cover 15 with the windscreen 16 and the transparent cover 25 omitted. As shown in FIG. 3, an upper portion of the inner cover 18 protrudes upward from the outer cover 17. The inner cover 18 includes a screen support portion 26. The screen support portion 26 extends upward from the outer cover 17.

The inner cover 18 includes a guide portion 27. The guide portion 27 is arranged below the screen support portion 26. The guide portion 27 is arranged behind the opening 23. The guide portion 27 is arranged between the transparent cover 25 and the sensing device 24. The guide portion 27 will be described later in detail.

As shown in FIG. 2, the windscreen 16 is supported by the screen support portion 26 via a movable member 19. Specifically, the windscreen 16 is attached to the movable member 19. The movable member 19 is supported by the screen support portion 26 via sliders 28 and 29. The movable member 19 is movably supported in the vertical direction with respect to the screen support portion 26. The windscreen 16 is thereby mounted on the vehicle body 2 so as to be movable between a first position and a second position. The second position is located above the first position.

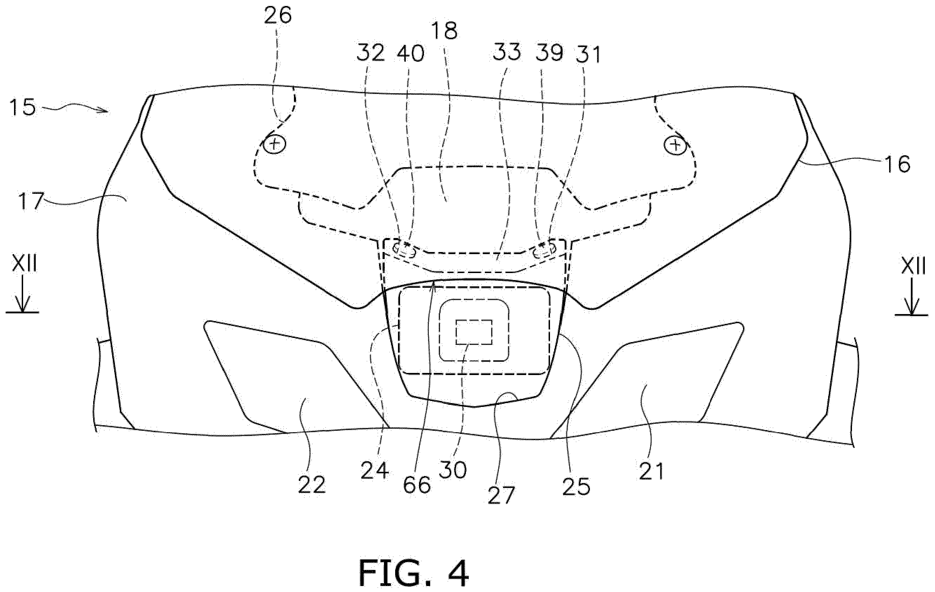

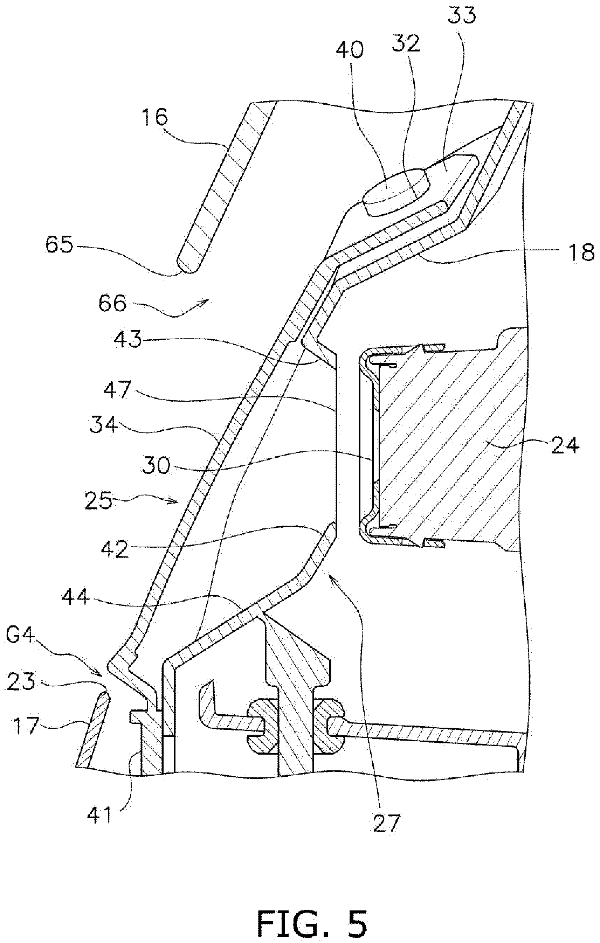

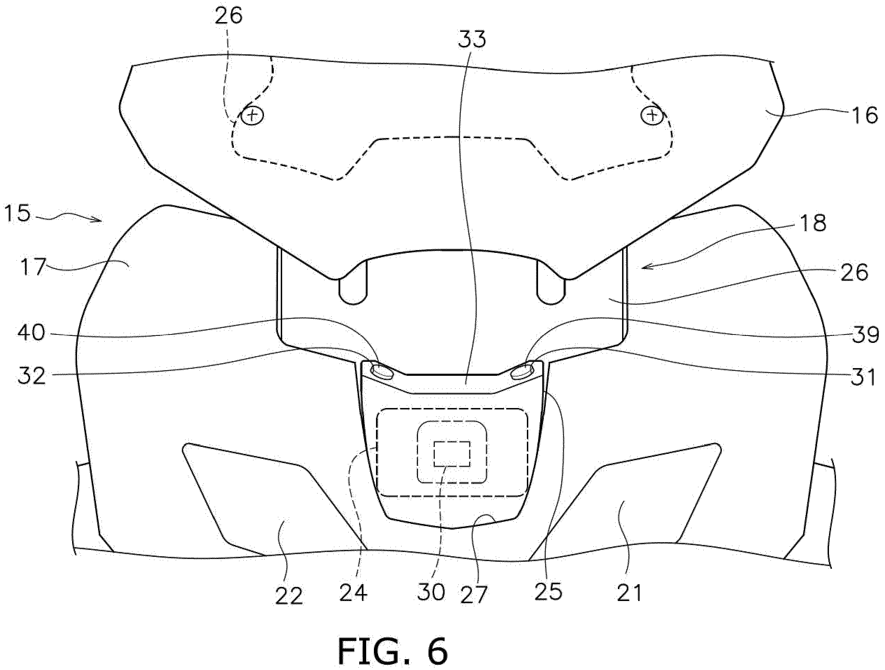

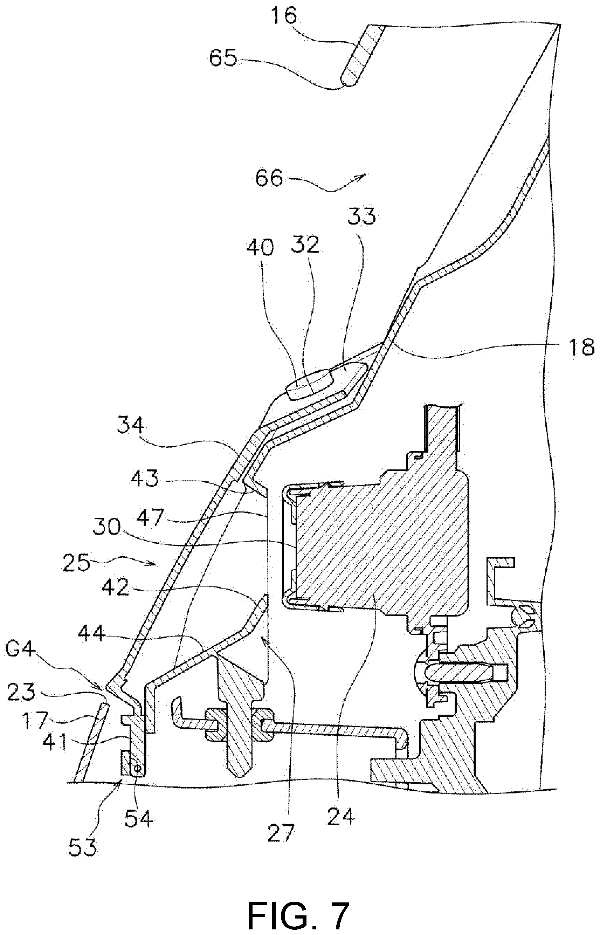

FIG. 4 is a front view of the front cover 15 when the windscreen 16 is positioned at the first position. FIG. 5 is a side sectional view of the front cover 15 when the windscreen 16 is positioned at the first position. FIG. 6 is a front view of the front cover 15 when the windscreen 16 is positioned at the second position. FIG. 7 is a side sectional view of the front cover 15 when the windscreen 16 is positioned at the second position.

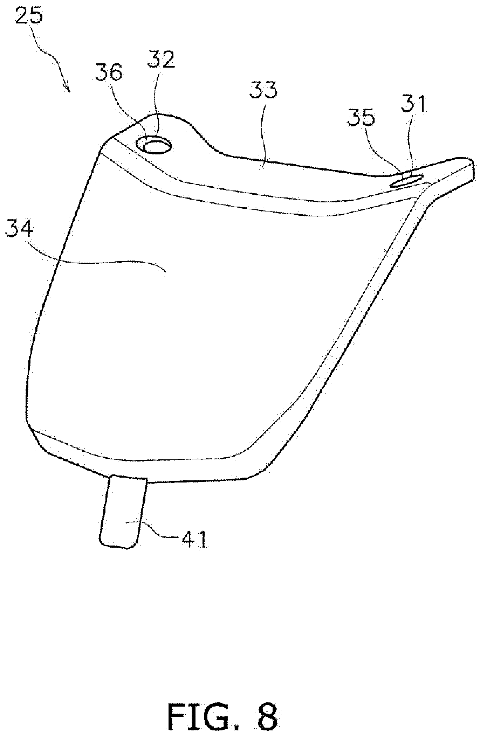

As shown in FIGS. 4 and 6, the transparent cover 25 includes first mounting portions 31 and 32 detachably attached to the front cover 15. FIG.8 is a perspective view of the transparent cover 25. As shown in FIG. 8, the transparent cover 25 includes an upper surface 33 and a front surface 34. The transparent cover 25 has a bent shape between the upper surface 33 and the front surface 34. The upper surface 33 has a shape in which the center in the left-right direction is recessed downward.

The first mounting portions 31 and 32 are arranged on the upper surface 33 of the transparent cover 25. The first mounting portions 31 and 32 include holes 35 and 36. The holes 35 and 36 are open upward. As shown in FIG. 3, the inner cover 18 includes holes 37 and 38. Screws 39 and 40 for fixing the transparent cover 25 to the inner cover 18 are passed through the holes 35 and 36 of the first mounting portions 31 and 32 and the holes 37 and 38 of the inner cover 18, respectively. The screws 39 and 40 are inserted into the holes 35 and 36 from above the first mounting portions 31 and 32.

As shown in FIGS. 4 and 5, the windscreen 16 is positioned forward of the first mounting portions 31 and 32 when the windscreen 16 is positioned at the first position. Further, when the windscreen 16 is positioned at the first position, the windscreen 16 is positioned below the first mounting portions 31 and 32. Therefore, when the windscreen 16 is positioned at the first position, the windscreen 16 overlaps the first mounting portions 31 and 32 from above the first mounting portions 31 and 32. When the windscreen 16 is positioned at the first position, the windscreen 16 overlaps the first mounting portions 31 and 32 from the front of the first mounting portions 31 and 32. When the windscreen 16 is positioned in the first position, the windscreen 16 is positioned above the sensing device 24.

As shown in FIGS. 6 and 7, the windscreen 16 is positioned rearward of the first mounting portions 31 and 32 when the windscreen 16 is positioned at the second position. Further, when the windscreen 16 is positioned at the second position, the windscreen 16 is positioned above the first mounting portions 31 and 32. Therefore, when the windscreen 16 is positioned at the second position, the windscreen 16 does not overlap the first mounting portions 31 and 32 from above the first mounting portions 31 and 32. When the windscreen 16 is positioned at the second position, the windscreen 16 does not overlap the first mounting portions 31 and 32 from the front of the first mounting portions 31 and 32.

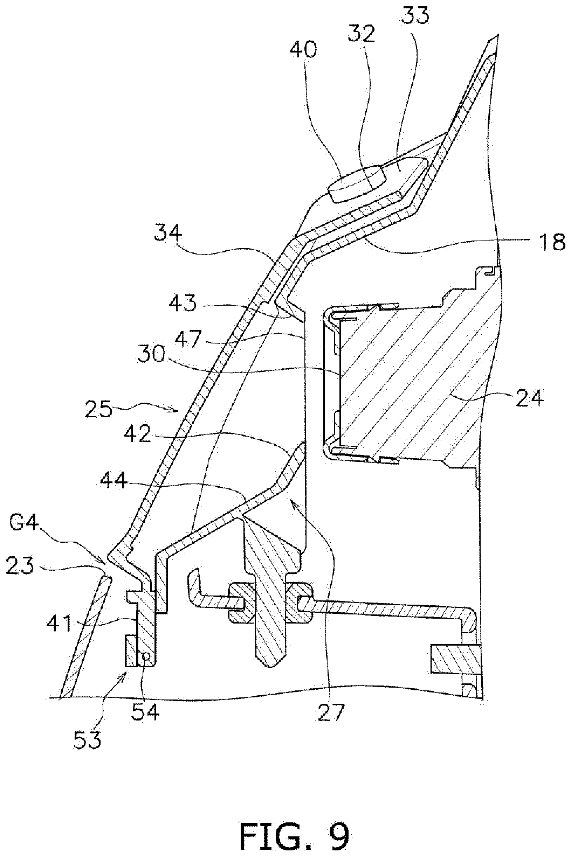

FIG. 9 is an enlarged side sectional view of the front cover 15. As shown in FIGS. 8 and 9, the transparent cover 25 includes a second mounting portion 41. The second mounting portion 41 is provided at a bottom of the transparent cover 25. The second mounting portion 41 protrudes downward from a lower edge of the front surface 34. The second mounting portion 41 is detachably attached to the front cover 15 by fitting.

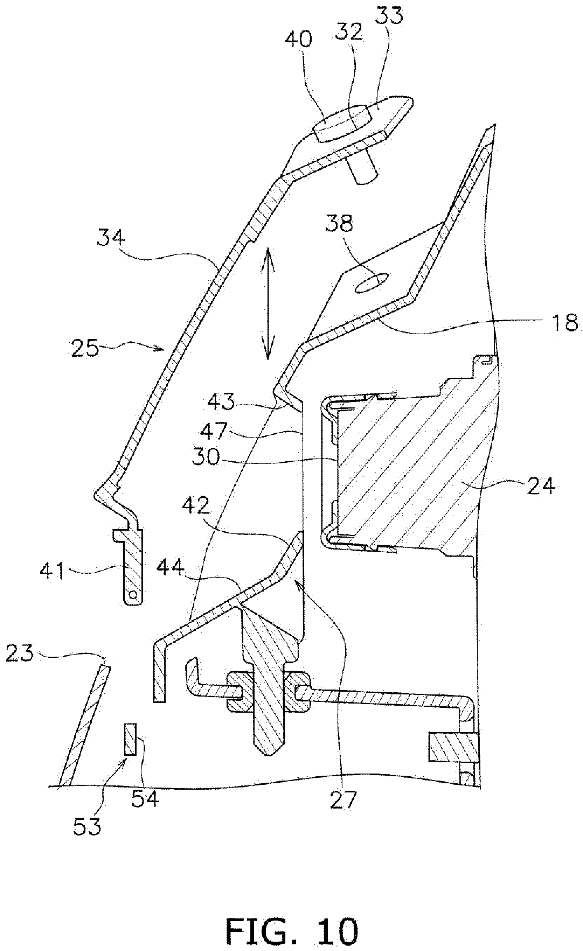

Specifically, the second mounting portion 41 is detachably attached to the inner cover 18 by fitting. The inner cover 18 includes an engaging portion 53. The engaging portion 53 is arranged behind the outer cover 17. The outer cover 17 covers the engaging portion 53 from the front. The second mounting portion 41 is detachably attached to the engaging portion 53. The engaging portion 53 includes a groove 54. The second mounting portion 41 is engaged to the engaging portion 53 by being inserted into the groove 54 of the engaging portion 53. As shown in FIG. 10, when the windscreen 16 is positioned at the second position, the second mounting portion 41 can be attached to and detached from the engaging portion 53 in the vertical direction.

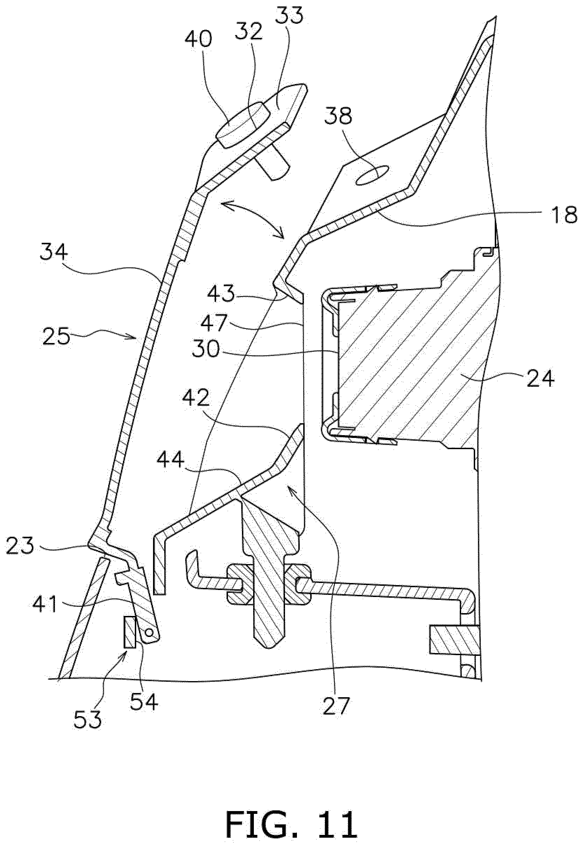

As shown in FIG. 9, a gap G4 is provided between a lower edge of the opening 23 of the outer cover 17 and the transparent cover 25. Further, the engaging portion 53 supports the second mounting portion 41 so that the transparent cover 25 is rotatable around the second mounting portion 41. Therefore, as shown in FIG. 11, when the windscreen 16 is positioned at the second position, the transparent cover 25 is rotatable around the second mounting portion 41 without being interfered by the outer cover 17. As a result, the degree of freedom of work when attaching and detaching the transparent cover 25 is improved.

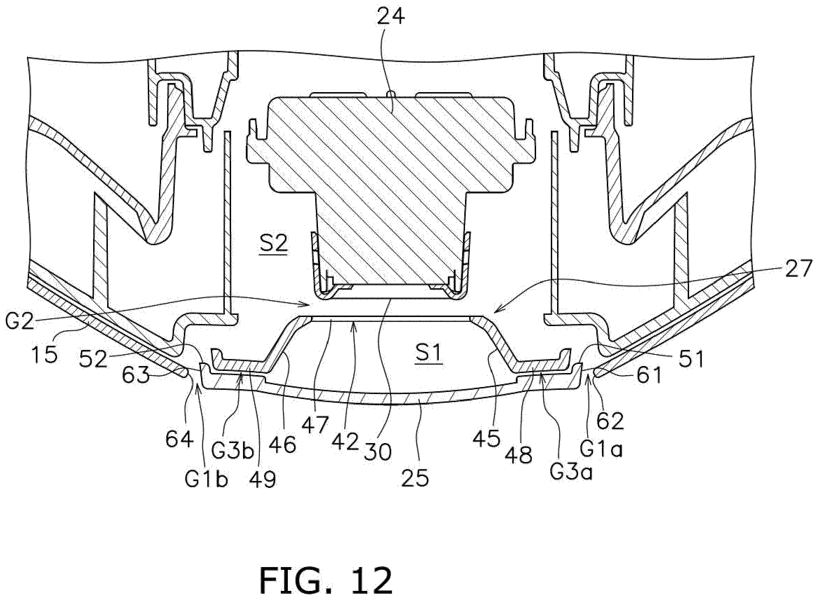

FIG. 12 is a cross-sectional view taken along the line XII-XII in FIG. 4. As shown in FIG. 12, the transparent cover 25 is arranged in front of the guide portion 27. As shown in FIGS. 3 and 12, the guide portion 27 includes a rear surface 42, an upper surface 43, a bottom surface 44, a left side surface 45, and a right side surface 46. The rear surface 42 is arranged to face the sensing device 24. The rear surface 42 includes an opening 47. The sensing device 24 includes a lens 30. The opening 47 is arranged to face the lens 30.

The upper surface 43, the bottom surface 44, the left side surface 45, and the right side surface 46 extend forward from the rear surface 42. As shown in FIG. 5, the upper surface 43 and the bottom surface 44 are inclined forward so that a distance between the upper surface 43 and the bottom surface 44 widens in the vertical direction. The upper surface 43 is inclined forward and upward. The bottom surface 44 is inclined forward and downward. As shown in FIG. 12, the left side surface 45 and the right side surface 46 are inclined forward so that a distance between the left side surface 45 and the right side surface 46 widens in the left-right direction. The left side surface 45 is inclined forward and leftward. The right side surface 46 is inclined forward and rightward.

As shown in FIG. 12, a first space S1 and a second space S2 are provided inside the front cover 15. The first space S1 is provided between the transparent cover 25 and the sensing device 24. The guide portion 27 covers the periphery of the first space S1. The first space S1 is separated from the second space S2 by the guide portion 27. The sensing device 24 is arranged in the second space S2.

Between the side edges of the transparent cover 25 and the front cover 15, first gaps G1a and G1b are provided. Specifically, the first gap G1a is provided between the left side edge 61 of the transparent cover 25 and the left side edge 62 of the opening 23. The first gap G1b is provided between the right side edge 63 of the transparent cover 25 and the right side edge 64 of the opening 23. Air entering the second space S2 through the first gaps G1a and G1b prevents the transparent cover 25 from fogging up. Further, even if water enters from the first gaps G1a and G1b, the guide portion 27 prevents the water from adhering to the sensing device 24 or the rear surface of the transparent cover 25.

A second gap G2 is provided between the guide portion 27 and the sensing device 24. Specifically, the rear surface 42 of the guide portion 27 is positioned with the second gap G2 from the lens 30 of the sensing device 24. The first space S1 communicates with the second space S2 through the second gap G2. Air enters the first space S1 through the second gap G2, thereby suppressing fogging of the transparent cover 25.

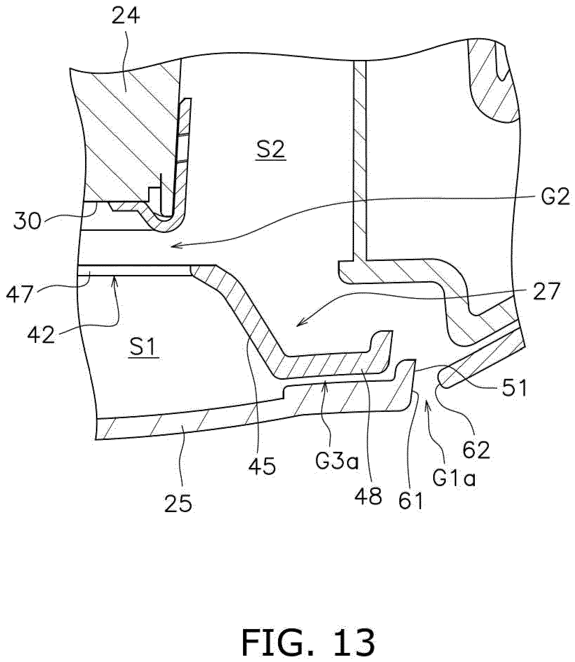

FIG. 13 is an enlarged sectional view of the front cover 15 and the transparent cover 25. As shown in FIG. 13, third gaps G3a and G3b are provided between the guide portion 27 and the transparent cover 25. Specifically, as shown in FIGS. 12 and 13, the guide portion 27 includes a first edge 48 and a second edge 49. The first edge 48 is connected to the left side surface 45. The first edge 48 extends leftward from the left side surface 45. The first edge 48 is arranged to face the inner surface of the transparent cover 25 from behind the transparent cover 25. The second edge 49 is connected to the right side surface 46. The second edge 49 extends rightward from the right side surface 46. The second edge 49 is arranged to face the inner surface of the transparent cover 25 from behind the transparent cover 25.

As shown in FIG. 13, the third gap G3a is provided between the first edge 48 and the inner surface of the transparent cover 25. The third gap G3a is narrower than the first gap G1a. The left side edge 61 of the transparent cover 25 has a bent shape to cover the third gap G3a. Specifically, the transparent cover 25 includes a first bent portion 51. The first bent portion 51 is bent rearward from the left side edge 61 of the transparent cover 25. The first bent portion 51 covers the third gap G3a from the left side.

The third gap G3b is provided between the second edge 49 and the inner surface of the transparent cover 25. The third gap G3b is narrower than the first gap G1b. The right side edge 63 of the transparent cover 25 has a bent shape to cover the third gap G3b. Specifically, the transparent cover 25 includes a second bent portion 52. The second bent portion 52 is bent rearward from the right side edge 63 of the transparent cover 25. The second bent portion 52 covers the third gap G3b from the right side. Intrusion of water through the third gaps G3a and G3b is suppressed by the bent shape of the left and right side edges 61 and 63of the transparent cover 25.

As shown in FIG. 5, the lower end 65 of the windscreen 16 is arranged with a gap from the transparent cover 25. Accordingly, a wind guide port 66 is provided between the lower end 65 of the windscreen 16 and the transparent cover 25. Further, as described above, the upper surface 33 of the transparent cover 25 has a downward recessed shape. Thereby, the space behind the windscreen 16 is expanded. When the straddled vehicle 1 is running, part of the running wind flows from the wind guide port 66 to the back side of the windscreen 16, thereby rectifying the turbulent flow in the space above a rider's head.

In the straddled vehicle 1 according to the present embodiment described above, the transparent cover 25 is detachably attached to the front cover 15 by the first mounting portions 31 and 32. Therefore, the maintainability of the transparent cover 25 is improved. Moreover, the windscreen 16 overlaps the first mounting portions 31 and 32 from above and from the front of the first mounting portions 31 and 32. Therefore, access to the first mounting portions 31 and 32 is restricted by the windscreen 16. Thereby, theft of the transparent cover 25 or mischief is deterred.

According to a further embodiment, the windscreen 16 may overlap the first mounting portions 31 and 32 only from above the first mounting portions 31 and 32. Alternatively, the windscreen 16 may overlap the first mounting portions 31 and 32 only from the front of the first mounting portions 31 and 32. The structures of the first mounting portions 31 and 32 are not limited to those of the above embodiment, and may be modified. For example, the first mounting portions 31 and 32 may be arranged at a position other than the upper surface 33 of the transparent cover 25. The structure of the second mounting portion 41 is not limited to that of the above embodiment, and may be modified. For example, the second mounting portion 41 may be attached by a fixing means such as a screw.

The shape of the transparent cover 25 is not limited to that of the above embodiment, and may be changed. For example, the upper surface 33 of transparent cover 25 may be flat. The structure of the guide portion 27 is not limited to that of the above embodiment, and may be modified. For example, the guide portion 27 may be a separate body from the inner cover 18. Alternatively, the guide portion 27 may be omitted. The positions of the first gaps G1a and G1b may be changed. The position of the second gap G2 may be changed. The positions of the third gaps G3a and G3b may be changed. Alternatively, one or some of the first to third gaps G1a, G1b, G2, G3a, and G3b may be omitted.

### REFERENCE SIGNS LIST

2: Vehicle body, 15: Front cover, 16: Windscreen, 17: Outer cover, 18: Inner cover, 24: Sensing device, 25: Transparent cover, 27: Guide portion 31, 32: First mounting portion, 41: Second mounting portion, 53: Engaging portion, 66: Wind guide port, G1a, G1b: First gap, G2: Second gap, G3a, G3b: Third gap, S1: First space, S2: Second space

## Claims

1. A straddled vehicle (1) comprising:
a vehicle body (2) including a front cover (15);
a windscreen (16) arranged above the front cover (15) with regard to an up-down-direction of the vehicle;
a sensing device (24) arranged behind the front cover (15) with regard to a front-rear-direction of the vehicle and configured to detect a situation in front of the vehicle body (2); and
a transparent cover (25) arranged in front of the sensing device (24) with regard to the front-rear-direction of the vehicle, **characterized in that** the transparent cover (25) includes a first mounting portion (31, 32) directly detachably mounted to the front cover (15), wherein the windscreen (16) overlaps with the first mounting portion (31, 32) from above with regard to the up-down-direction of the vehicle and/or from a front of the first mounting portion (31, 32) with regard to the front-rear-direction of the vehicle.

2. The straddled vehicle (1) according to claim 1, **characterized in that** the windscreen (16) is attached to the vehicle body (2) so as to be movable between a first position and a second position located above the first position above with regard to the up-down-direction of the vehicle.

3. The straddled vehicle (1) according to claim 2, **characterized in that** the windscreen (16) overlaps the first mounting portion (31, 32) from above with regard to the up-down-direction of the vehicle when the windscreen (16) is positioned at the first position, and
the windscreen (16) does not overlap the first mounting portion (31, 32) from above with regard to the up-down-direction of the vehicle when the windscreen (16) is positioned at the second position, and/or
the windscreen (16) overlaps the first mounting portion (31, 32) from the front with regard to the front-rear-direction of the vehicle when the windscreen (16) is positioned at the first position, and
the windscreen (16) does not overlap the first mounting portion (31, 32) from the front with regard to the front-rear-direction of the vehicle when the windscreen (16) is positioned at the second position.

4. The straddled vehicle (1) according to any one of claims 1 to 3, **characterized in that** the first mounting portion (31, 32) is arranged on an upper surface (33) of the transparent cover (25) with regard to the up-down-direction of the vehicle.

5. The straddled vehicle (1) according to any one of claims 1 to 4, **characterized in that** the transparent cover (25) includes a second mounting portion (41) provided at a bottom of the transparent cover (25) with regard to the up-down-direction of the vehicle, and
the second mounting portion (41) is detachably attached to the front cover (15) by fitting.

6. The straddled vehicle (1) according to claim 5, **characterized in that** the front cover (15) includes an engaging portion (53) to which the second mounting portion (41) is attached, and
the engaging portion (53) supports the second mounting portion (41) so that the transparent cover (25) is rotatable around the second mounting portion (41).

7. The straddled vehicle (1) according to claim 6, **characterized in that** the front cover (15) includes
an outer cover (17), and
an inner cover (18) at least partially arranged behind the outer cover (17) with regard to the front-rear-direction of the vehicle, and
the engaging portion (53) is provided at the inner cover (18) and arranged behind the outer cover (17) with regard to the front-rear-direction of the vehicle.

8. The straddled vehicle (1) according to any one of claims 1 to 7, **characterized in that** a first gap (G1a, G1b) is provided between a side edge (61, 63) of the transparent cover (25) and the front cover (15).

9. The straddled vehicle (1) according to any one of claims 1 to 8, **characterized in that** the front cover (15) includes a guide portion (27) arranged between the transparent cover (25) and the sensing device (24), and
the guide portion (27) covers a periphery of a first space (S1) between the transparent cover (25) and the sensing device (24).

10. The straddled vehicle (1) according to claim 9, **characterized in that** a second gap (G2) is provided between the guide portion (27) and the sensing device (24), and
the first space (S1) communicates with a second space (S2) in the front cover (15) through the second gap (G2).

11. The straddled vehicle (1) according to claim 9 or 10, **characterized in that** a third gap (G3a, G3b) is provided between the guide portion (27) and the transparent cover (25), and
the side edge (61, 63) of the transparent cover (25) has a bent shape to cover the third gap (G3a, G3b).

12. The straddled vehicle (1) according to any one of claims 1 to 11, **characterized in that** a wind guide port (66) is provided between a lower end (65) of the windscreen (16) and the transparent cover (25).

13. The straddled vehicle (1) according to claim 12, **characterized in that** an upper surface (33) of the transparent cover (25) has a downwardly recessed shape with regard to the up-down-direction of the vehicle.

## Patentansprüche

1. Ein Spreizsitzfahrzeug (1), das umfasst:
ein Fahrzeugkörper (2), der eine Frontabdeckung (15) enthält;
eine Windschutzscheibe (16), die oberhalb der Frontabdeckung (15) in Bezug auf eine Auf-Ab-Richtung des Fahrzeugs angeordnet ist;
eine Erfassungsvorrichtung (24), die in hinter der Frontabdeckung (15), in Bezug auf eine Vorder-Rück-Richtung des Fahrzeugs, angeordnet ist, und konfiguriert ist, um eine Situation vor dem Fahrzeugkörper (2) zu erfassen; und
eine transparente Abdeckung (25), die vor der Erfassungsvorrichtung (24), in Bezug auf die Vorder-Rück-Richtung des Fahrzeugs angeordnet ist, **dadurch gekennzeichnet, dass**
die transparente Abdeckung (25) einen ersten Befestigungsabschnitt (31, 32) enthält, der direkt abnehmbar an der Frontabdeckung (15) angebracht ist, wobei
die Windschutzscheibe (16) mit dem ersten Befestigungsabschnitt (31, 32) von oben in Bezug auf die Auf-Ab-Richtung des Fahrzeugs und/oder von einer Vorderseite des ersten Befestigungsabschnitts (31, 32) in Bezug auf die Vorder-Rück-Richtung des Fahrzeugs überlappt.

2. Das Spreizsitzfahrzeug (1) gemäß Anspruch 1, **dadurch gekennzeichnet, dass** die Windschutzscheibe (16) an dem Fahrzeugkörper (2) angebracht ist, so dass diese zwischen einer ersten Position und einer zweiten Position, die sich in Bezug auf die Auf-Ab-Richtung des Fahrzeugs oberhalb der ersten Position befindet, bewegbar ist.

3. Das Spreizsitzfahrzeug (1) gemäß Anspruch 2, **dadurch gekennzeichnet, dass** die Windschutzscheibe (16) den ersten Befestigungsabschnitt (31, 32) von oben in Bezug auf die Auf-Ab-Richtung des Fahrzeugs überlappt, wenn die Windschutzscheibe (16) in der ersten Position positioniert ist, und
die Windschutzscheibe (16) den ersten Befestigungsabschnitt (31, 32) von oben in Bezug auf die Auf-Ab-Richtung des Fahrzeugs nicht überlappt, wenn die Windschutzscheibe (16) in der zweiten Position positioniert ist, und/oder
die Windschutzscheibe (16) den ersten Befestigungsabschnitt (31, 32) von vorne in Bezug auf die Vorder-Rück-Richtung des Fahrzeugs überlappt, wenn die Windschutzscheibe (16) in der ersten Position positioniert ist, und
die Windschutzscheibe (16) den ersten Befestigungsabschnitt (31, 32) von vorne in Bezug auf die Vorder-Rück-Richtung des Fahrzeugs nicht überlappt, wenn die Windschutzscheibe (16) in der zweiten Position angeordnet ist.

4. Das Spreizsitzfahrzeug (1) gemäß irgendeinem der Ansprüche 1 bis 3, **dadurch gekennzeichnet, dass** der erste Befestigungsabschnitt (31, 32) auf einer oberen Fläche (33) der transparenten Abdeckung (25) in Bezug auf die Auf-Ab-Richtung des Fahrzeugs angeordnet ist.

5. Das Spreizsitzfahrzeug (1) gemäß irgendeinem der Ansprüche 1 bis 4, **dadurch gekennzeichnet, dass** die transparente Abdeckung (25) einen zweiten Befestigungsabschnitt (41) enthält, der an einem Boden der transparenten Abdeckung (25) in Bezug auf die Auf-Ab-Richtung des Fahrzeugs vorgesehen ist, und
der zweite Befestigungsabschnitt (41) ist durch Einsetzten abnehmbar an der vorderen Abdeckung (15) befestigt.

6. Das Spreizsitzfahrzeug (1) gemäß Anspruch 5, **dadurch gekennzeichnet, dass** die vordere Abdeckung (15) einen Eingriffsabschnitt (53) enthält, an dem der zweite Befestigungsabschnitt (41) befestigt ist, und
der Eingriffsabschnitt (53) den zweiten Befestigungsabschnitt (41) lagert, so dass die transparente Abdeckung (25) um den zweiten Befestigungsabschnitt (41) drehbar ist.

7. Das Spreizsitzfahrzeug (1) gemäß Anspruch 6, **dadurch gekennzeichnet, dass** die vordere Abdeckung (15) enthält
eine äußere Abdeckung (17), und
eine innere Abdeckung (18), die zumindest teilweise hinter der äußeren Abdeckung (17) in Bezug auf die Vorder-Rück-Richtung des Fahrzeugs angeordnet ist, und
der Eingriffsabschnitt (53) an der inneren Abdeckung (18) vorgesehen und in Bezug auf die Vorder-Rück-Richtung des Fahrzeugs hinter der äußeren Abdeckung (17) angeordnet ist.

8. Das Spreizsitzfahrzeug (1) gemäß irgendeinem der Ansprüche 1 bis 7, **dadurch gekennzeichnet, dass** ein erster Spalt (G1a, G1b) zwischen einer Seitenkante (61, 63) der transparenten Abdeckung (25) und der vorderen Abdeckung (15) vorgesehen ist.

9. Das Spreizsitzfahrzeug (1) gemäß irgendeinem der Ansprüche 1 bis 8, **dadurch gekennzeichnet, dass** die Frontabdeckung (15) einen Führungsabschnitt (27) enthält, der zwischen der transparenten Abdeckung (25) und der Erfassungsvorrichtung (24) angeordnet ist, und
der Führungsabschnitt (27) einen Umfang eines ersten Raums (S1) zwischen der transparenten Abdeckung (25) und der Erfassungsvorrichtung (24) abdeckt.

10. Das Spreizsitzfahrzeug (1) gemäß Anspruch 9, **dadurch gekennzeichnet, dass** ein zweiter Spalt (G2) zwischen dem Führungsteil (27) und der Erfassungsvorrichtung (24) vorgesehen ist, und
der erste Raum (S1) mit einem zweiten Raum (S2) in der vorderen Abdeckung (15) durch den zweiten Spalt (G2) in Verbindung steht.

11. Das Spreizsitzfahrzeug (1) gemäß Anspruch 9 oder 10, **dadurch gekennzeichnet, dass** ein dritter Spalt (G3a, G3b) zwischen dem Führungsteil (27) und der transparenten Abdeckung (25) vorgesehen ist, und
die Seitenkante (61, 63) der transparenten Abdeckung (25) eine gebogene Form hat, um den dritten Spalt (G3a, G3b) abzudecken.

12. Das Spreizsitzfahrzeug (1) gemäß irgendeinem der Ansprüche 1 bis 11, **dadurch gekennzeichnet, dass** eine Windleitanschluss (66) zwischen einem unteren Ende (65) der Windschutzscheibe (16) und der transparenten Abdeckung (25) vorgesehen ist.

13. Das Spreizsitzfahrzeug (1) gemäß Anspruch 12, **dadurch gekennzeichnet, dass** eine obere Fläche (33) der transparenten Abdeckung (25) eine nach unten vertiefte Form, in Bezug auf die Auf-Ab-Richtung des Fahrzeugs, hat.

## Revendications

1. Véhicule à selle (1) comprenant :
une carrosserie de véhicule (2) comprenant un capot avant (15) ;
un pare-brise (16) disposé au-dessus du capot avant (15) dans le sens du haut vers le bas du véhicule ;
un dispositif de détection (24) disposé derrière le capot avant (15) par rapport à la direction avant-arrière du véhicule et configuré pour détecter une situation à l'avant de la carrosserie du véhicule (2) ; et
un capot transparent (25) disposé devant le dispositif de détection (24) dans la direction avant-arrière du véhicule, **caractérisé en ce que** le capot transparent (25) comprend une première partie de montage (31, 32) directement montée de manière amovible sur le capot avant (15), dans lequel le pare-brise (16) chevauche la première partie de montage (31, 32) par le haut dans le sens du haut vers le bas du véhicule et/ou par l'avant de la première partie de montage (31, 32) dans la direction avant-arrière du véhicule.

2. Véhicule à selle (1) selon la revendication 1, **caractérisé en ce que** le pare-brise (16) est fixé au corps du véhicule (2) de manière à être mobile entre une première position et une deuxième position située au-dessus de la première position au-dessus par rapport au sens du haut vers le bas du véhicule.

3. Véhicule à selle (1) selon la revendication 2, **caractérisé en ce que** le pare-brise (16) recouvre la première partie de montage (31, 32) par le haut dans le sens du haut vers le bas du véhicule lorsque le pare-brise (16) est positionné dans la première position, et
le pare-brise (16) ne chevauche pas la première partie de montage (31, 32) par le haut dans le sens du haut vers le bas du véhicule lorsque le pare-brise (16) est placé dans la deuxième position, et/ou
le pare-brise (16) recouvre la première partie de montage (31, 32) de l'avant par rapport à la direction avant-arrière du véhicule lorsque le pare-brise (16) est placé dans la première position, et
le pare-brise (16) ne chevauche pas la première partie de montage (31, 32) de l'avant par rapport à la direction avant-arrière du véhicule lorsque le pare-brise (16) est placé dans la deuxième position.

4. Véhicule à selle (1) selon l'une quelconque des revendications 1 à 3, **caractérisé en ce que** la première partie de montage (31, 32) est disposée sur une surface supérieure (33) du capot transparent (25) par rapport au sens du haut vers le bas du véhicule.

5. Véhicule à selle (1) selon l'une quelconque des revendications 1 à 4, **caractérisé en ce que** le capot transparent (25) comprend une deuxième partie de montage (41) située au bas du capot transparent (25) dans le sens du haut vers le bas du véhicule, et
la deuxième partie de montage (41) est fixée de manière amovible au capot avant (15) par emboîtement.

6. Véhicule à selle (1) selon la revendication 5, **caractérisé en ce que** le capot avant (15) comprend une partie d'engagement (53) à laquelle la deuxième partie de montage (41) est attachée, et
la partie d'engagement (53) soutient la deuxième partie de montage (41) de sorte que le capot transparent (25) puisse tourner autour de la deuxième partie de montage (41).

7. Véhicule à selle (1) selon la revendication 6, **caractérisé par le fait que** le capot avant (15) comprend
un capot extérieur (17), et
un capot intérieur (18) au moins partiellement disposé derrière le capot extérieur (17) par rapport à la direction avant-arrière du véhicule, et
la partie d'engagement (53) est prévue sur le capot intérieur (18) et disposée derrière le capot extérieur (17) par rapport à la direction avant-arrière du véhicule.

8. Véhicule à selle (1) selon l'une quelconque des revendications 1 à 7, **caractérisé en ce qu'**un premier espace (G1a, G1b) est prévu entre un bord latéral (61, 63) de la couverture transparente (25) et la couverture avant (15).

9. Véhicule à selle (1) selon l'une quelconque des revendications 1 à 8, **caractérisé en ce que** le capot avant (15) comprend une partie de guidage (27) disposée entre le capot transparent (25) et le dispositif de détection (24), et
la partie de guidage (27) couvre une périphérie d'un premier espace (S1) entre le capot transparent (25) et le dispositif de détection (24).

10. Véhicule à selle (1) selon la revendication 9, **caractérisé en ce qu'**un deuxième espace (G2) est prévu entre la partie de guidage (27) et le dispositif de détection (24), et le premier espace (S1) communique avec un deuxième espace (S2) dans le capot avant (15) à travers le deuxième espace (G2).

11. Véhicule à selle (1) selon les revendications 9 ou 10, **caractérisé en ce qu'**un troisième espace (G3a, G3b) est prévu entre la partie de guidage (27) et le capot transparent (25), et
le bord latéral (61, 63) du capot transparent (25) a une forme courbée pour couvrir la troisième fente (G3a, G3b).

12. Véhicule à selle (1) selon l'une quelconque des revendications 1 à 11, **caractérisé en ce qu'**un orifice de guidage du vent (66) est prévu entre une extrémité inférieure (65) du pare-brise (16) et le capot transparent (25).

13. Véhicule à selle (1) selon la revendication 12, **caractérisé par le fait qu'**une surface supérieure (33) du capot transparent (25) a une forme en retrait vers le bas par rapport au sens du haut vers le bas du véhicule.
